# EUROPEAN PATENT APPLICATION

(11) **EP 1 616 901 A1**
(43) Date of publication of application: **18.01.2006**
(21) Application number: 05009250.1
(22) Date of filing: 27.04.2005
(51) Int. Cl.: C08J 3/22

(54) **Colorant compositions and production process thereof**

(30) Priority: 12.07.2004 JP 2004204978; 12.07.2004 JP 2004204979
(71) Applicant: Dainichiseika Color & Chemicals Mfg. Co., Ltd., Chuo-ku Tokyo 103-8383 (JP)
(72) Inventor: Nagao, Ken, Dainichiseika Color & Chemicals Mfg., Chuo-ku Tokyo 103-8383 (JP); Ito, Junichi, Dainichiseika Color & Chemic. Mfg., Chuo-ku Tokyo 103-8383 (JP)
(74) Representative: Hartz, Nikolai

(57) **Abstract**

A colorant composition contains 0.01 to 99.97 wt.% of a polypropylene resin, 0.01 to 60 wt.% of a pigment, 0.01 to 60 wt.% of an elastomer component, and 0.01 to 40 wt.% of a dispersant. The colorant composition can be produced by kneading them together.

## Description

### FIELD OF THE INVENTION

This invention relates to colorant compositions, each of which can color a polypropylene resin concurrently with molding or otherwise forming (hereinafter collectively called "molding" for the sake of brevity) the polypropylene resin, and also to a process for producing the colorant compositions. In particularly, this invention is concerned with colorant compositions, each of which contains an elastomer component and can afford a colored, molded product of excellent opacifying effect, and also with a process for producing the colorant compositions.

### DESCRIPTION OF THE BACKGROUND

In recent years, a variety of synthetic resins, for example, thermoplastic resins such as polyethylene and polyvinyl chloride and thermosetting resins such as phenol resin and urea resin are widely used in various products as industrial materials and also, as materials convenient and useful in everyday domestic life.

Upon coloring these resins, conventional coloring methods have been used, including melting and kneading a resin and a pigment into precolored resin pellets through an extruder or the like and then molding the precolored resin pellets, or upon molding, kneading uncolored resin pellets and a pigment such that coloring is effected concurrently with the molding.

These coloring methods are, however, accompanied by problems in that the pigment is not evenly dispersed in the resin to result in uneven coloring and moreover, the molded product is provided with irregular, non-smooth surfaces.

Therefore, colorant compositions which are each obtained by kneading a pigment with the same kind of resin as the resin to be molded, in other words, dry colors, master batches and the like have recently foundwide-spread utility in industry. These dry colors and master batches are each kneaded with the same kind of resin as the resin used in the dry color or master batch to achieve coloring concurrently with the molding.

Upon conducting coloring with such a pigment or colorant composition, however, the use of a small particle size as the particle size of the pigment leads to a reduction in opacifying effect because the particle size of pigment particles to be dispersed in a resin is in an opposed relationship with their opacifying effect. To increase the opacifying effect, it is, therefore, necessary to add the pigment in a greater amount. This has become a cause of increased costs, as pigments are more costly than the above-described various synthetic resins.

In has been reported that a state of microscopic phase separation, called a "sea-island structure", is formed when an amorphous material such as an elastomer component is blended with a crystalline resin such as a polypropylene resin.

When a pigment such as carbon black is dispersed in such a blend, the pigment exists only in the amorphous material so that colored phases are formed. As a consequence, colored particles are obtained in sizes corresponding to the sizes of particles of the amorphous material existing in the form of separated microphases.

### SUMMARY OF THE INVENTION

An object of the present invention is, therefore, to make use of these properties and to provide a colorant composition that can afford a colored molded product having high opacifying effect.

The above-mentioned object of the present invention can be achieved by the following invention:
1. A colorant composition comprising:
   0.01 to 99.97 wt.% of a polypropylene resin,
   0.01 to 60 wt.% of a pigment,
   0.01 to 60 wt.% of an elastomer component, and
   0.01 to 40 wt.% of a dispersant.
2. A colorant composition as described above under 1, wherein the polypropylene resin has a MI of from 0.1 to 30 (190°C, 2.16 kg).
3. A colorant composition as described above under 1, wherein the pigment is at least one pigment selected from a group consisting of inorganic pigments.
4. A colorant composition as described above under 1, wherein the pigment is carbon black.
5. A colorant composition as described above under 1, wherein the elastomer component has a MI of from 0.1 to 50 (190°C, 2.16 kg).
6. A colorant composition as described above under 1, wherein the elastomer component is very low density polyethylene.
7. A colorant composition as described above under 1, wherein the dispersant is at least one dispersant selected from the group consisting of fatty-acid-ester-based dispersants and fatty-acid-amide-based dispersants.
8 . A process for producing a colorant composition, which comprises kneading 0.01 to 99. 97 wt. % of a polypropylene resin, 0.01 to 60 wt.% of a pigment, 0.01 to 60 wt.% of an elastomer component, and 0.01 to 40 wt.% of a dispersant.
9. A process as described above under 8, wherein, after the pigment, elastomer component and dispersant are kneaded, the resulting kneaded mass and the polypropylene are kneaded.

The colorant composition according to the present invention is obtained by adding the polypropylene resin, pigment and dispersant in predetermined proportions, and preferably, kneading them in a predetermined sequence. The colorant composition makes it possible to afford a colored molded product having good opacifying effect.

### DETAILED DESCRIPTION OF THE INVENTION AND PREFERRED EMBODIMENTS

The present invention will next be described in further detail based on best modes for practicing it. The polypropylene resin for use in the present invention is general polypropylene resin which has been used conventionally. Examples include polypropylene resins such as homopolymer, block copolymers and random copolymers. In the present invention, these polypropylene resins can be used either singly or in combination.

Among the above-described polypropylene resins, homopolymers having melt indexes (MI) of from 0.1 to 30 (190°C, 2.16 kg). More preferred are homopolymers the MIs of which are from 10 to 20. An MI smaller than 0.1 is not preferred, because such an unduly small MI makes it difficult to knead and mix the colorant composition with a material to be colored, thereby failing to obtain a state of sufficiently-separatedmicrophases. An MI larger than 30, on the other hand, is not preferred either, because such an excessively large MI results in reduced processability upon forming the colorant composition into pellets through an extruder.

Examples of the pigment for use in the present invention include inorganic pigments such as titanium oxide, red iron oxide, red lead, and carbon black. These inorganic pigments can be used either singly or in combination. Carbon black is particularly preferred.

Further, examples of the elastomer component for use in the present invention include ethylene-propylene rubber, ethylene-butene rubber, and very low density polyethylene (VLDPE). Particularly preferred is very low density polyethylene having an MI of from 0.1 to 50 (190°C, 2.16 kg) . An MI smaller than 0.1 is not preferred, because such an unduly small MI makes it difficult to knead and mix the colorant composition with a material to be colored, thereby failing to obtain a state of sufficiently-separatedmicrophases in a colored molded product. An MI larger than 50, on the other hand, is not preferred either, because such an excessively large MI results in reduced processability upon kneading the colorant composition in a Banbury mixer or the like.

As preferred dispersants for use in the present invention, fatty-acid-ester-based dispersants and fatty-acid-amide-based dispersants can be mentioned. Fatty acids useful in these dispersants include fatty acids having 9 to 40 carbon atoms, for example, pelargonic acid, capric acid, lauric acid, myristic acid, palmitic acid, stearic acid, montanic acid, 2-oxycaproic acid, 2-oxystearic acid, and the like.

The fatty-acid-based dispersants include the monoglycerides of the above-described fatty acids and the di- or triglycerides of the above-described fatty acids in each which the fatty acid moieties can be either the same or different, for example, 1-monocapric glyceride, 1-monostearic glyceride, 1,2-distearic diglyceride, 1-stearic-2-palmitic diglyceride, hydroxystearic triglyceride, and 1-caprylic-2,3-distearic triglyceride. On the other hand, the fatty-acid-amide dispersants include, for example, stearamide, oleamide, erucylamide, behenylamide, methylenebisstearamide, ethylenebisstearamide, ethylenebisoleamide, and the like.

The colorant composition according to the present invention contains the above-described components as essential components. The polypropylene resin accounts for 0.01 to 99.97 wt.%, preferably 40 to 60 wt.% of the colorant composition. A proportion of the polypropylene resin smaller than 0.01 wt.% is not preferred from the standpoint of processability, because such an excessively small proportion of the polypropylene resin leads to a colorant composition having inferior mixability with the polypropylene resin to be colored. A proportion of the polypropylene resin greater than 99.97 wt.%, on the other hand, is not preferred, because such an unduly large proportion of the polypropylene resin makes it difficult to achieve a state of microphase separation in the colored molded product.

The pigment account for 0.01 to 60 wt.%, preferably 20 to 40 wt.% of the colorant composition. A proportion of the pigment smaller than 0.01 wt.% is not preferred, because such an excessively small proportion of the pigment results in a colorant composition the tinting power of which is so low that the colorant composition is not equipped with any function as a colorant. A proportion of the pigment larger than 60 wt.%, on the other hand, is not preferred either, because such an unduly large proportion of the pigment leads to a colorant composition having deteriorated mixability with the polypropylene resin to be colored.

The elastomer component accounts for 0.01 to 60 wt. %, preferably 20 to 40 wt.% of the colorant composition. A proportion of the elastomer component smaller than 0.01 wt.% is not preferred, because such an unduly small proportion of the elastomer component makes it difficult to obtain a state of microphase separation in the colored molded product. A proportion of the elastomer component larger than 60.0 wt.%, on the other hand, is not preferred either, because such an excessively large proportion of the elastomer component leads to a colorant composition having deteriorated mixability with the polypropylene resin to be colored.

The dispersant accounts for 0.01 to 40 wt.%, preferably 0.1 to 3 wt.% of the colorant composition. A proportion of the dispersant smaller than 0.01 wt.% is not preferred, because such an unduly small proportion of the dispersant cannot fully exhibit the effects of the dispersant so that the pigment is dispersed poorly. A proportion of the dispersant greater than 40.0 wt.%, on the other hand, is not preferred either, because such an excessively large proportion of the dispersant leads to a colorant composition having deteriorated processability upon processing it in a Banbury mixer.

To the colorant composition according to the present invention, one or more optional components other than the above-described components, for example, one or more additives such as lubricants, antistatic agents, ultraviolet absorbers and antioxidants can be added as needed.

The colorant composition according to the present invention, which contains the above-mentioned components, can be obtained by kneading 0.01 to 60 wt.% of the pigment, 0.01 to 60 wt.% of the elastomer component, 0.01 to 40 wt.% of the dispersant and 0.01 to 99.97 wt.% of the polypropylene resin. Upon kneading, the mixing temperature can preferably be from 150 to 250°C. Such a colorant composition is used as a colorant master batch, is useful especially for the coloring and molding of a polypropylene resin, and provides a colored molded product having high opacifying effect and excellent surface smoothness.

As a particularly preferred production process, the pigment, elastomer component and dispersant are firstly kneaded in the above-described proportions in a kneader such as a Banbury mixer to obtain a kneaded mass. Here, the mixing temperature may preferably be from 100 to 200°C. The resulting kneaded mass is then molten and kneaded together with the polypropylene resin in the above-described proportions in a suitable kneader such as an extruder to obtain the colorant composition. In this melting and kneading procedure, the mixing temperature and the like are similar to those described above.

The coloring and molding of the uncolored polypropylene resin with the above-mentioned colorant master batch can be conducted by mixing the colorant master batch with the uncolored polypropylene resin in accordance with a color density required for the final molded product and then conducting molding at 150°C to 300°C by one of various extruders, injection molding machines and the like. A molded product is obtained, for example, in the form of a plate, film or the like.

### Examples

The present invention will hereinafter be described in detail based on examples of the present invention while making comparisons with comparative examples. It is to be noted that in the examples and comparative examples, each "part" or "parts" means part or parts by weight.

### Example 1

Carbon black (35.0 parts), an elastomer component (VLDPE, MI: 20) (34.0 parts), a fatty-acid-amide-based dispersant ("FATTY ACID AMIDE E", trade name; product of Kao Corporation) (0.8 part) and a phenolic antioxidant ("IRGANOX 1076", trade name; product of Ciba-Geigy AG)(0.2 part) were kneaded using a Banbury mixer.

After the thus-obtained kneaded mass (70.0 parts) and a polypropylene resin (homopolymer, MI: 18) (30.0 parts) were thoroughly mixed in a Henschel mixer, the resulting mass was kneaded and extruded through an extruder into pellets at 150°C to 250°C to obtain a pellet-shaped colorant master batch of 3x3 mm in size.

The colorant master batch (5.0 parts) and a polypropylene resin (100.0 parts) of the same kind as the above-described polypropylene resin were mixed. Using an injection molding machine with 50 tons of clamping force, the polypropylene resin was concurrently molded and colored at 180°C to 220°C into a molded plate of 50x60x2 mm. The molded plate was visually observed for its opacifying effect, and the result is shown in Table 1.

The molded plate was cut off with a razor, and its cross-section was observed with an electron microscope. As a result, a state of separation of the pigment-elastomer component into microphases was confirmed. The result is also shown in Table 1. It is to be noted that in Table 1, scores 3 to 5 each indicates the level of the opacifying effect of the corresponding molded plate or the degree of a state of separation of the pigment-elastomer component into microphases in the polypropylene resin of the corresponding molded plate, a greater score indicates a better opacifying effect or a better state of microphase separation, and scores of 4 and greater are considered to be acceptable.

As is evident from Table 1, the molded plate of Example 1 was good in opacifying effect. Further, the polypropylene resin in the molded plate of Example 1 was also good in the state of separation of the pigment-elastomer component into microphases.

### Example 2

Red iron oxide (35.0 parts), an elastomer component (VLDPE, MI: 20) (34.0 parts), "FATTY ACID AMIDE E" (0.8 part) and "IRGANOX 1076" (0.2 part) were kneaded using a Banbury mixer.

After the thus-obtained kneaded mass (70.0 parts) and a polypropylene resin (homopolymer, MI: 18) (30.0 parts) were thoroughly mixed in a Henschel mixer, the resulting mass was kneaded and extruded through an extruder into pellets at 150°C to 250°C to obtain a pellet-shaped colorant master batch of 3x3 mm in size.

The colorant master batch (5.0 parts) and a polypropylene resin (100.0 parts) of the same kind as the above-described polypropylene resin were mixed. Using an injection molding machine with 50 tons of clamping force, the polypropylene resin was concurrently molded and colored at 180°C to 220°C into a molded plate of 50×60×2 mm. The molded plate was visually observed for its opacifying effect, and the result is shown in Table 1.

The molded plate was cut off with a razor, and its cross-section was observed with an electron microscope. As a result, a state of separation of the pigment-elastomer component into microphases was confirmed. The result is also shown in Table 1.

As is evident from Table 1, the molded plate of Example 2 was good in opacifying effect. Further, the polypropylene resin in the molded plate of Example 2 was also good in the state of separation of the pigment-elastomer component into microphases.

### Example 3

Red iron oxide (35.0 parts), an elastomer component (VLDPE, MI: 20) (34.0parts), a polypropylene resin (homopolymer, MI: 18) (30.0 parts), "FATTY ACID AMIDE E" (0.8 part) and "IRGANOX 1076" (0.2 part), which were of the same kinds as the corresponding components employed in Example 2, were kneaded using a Banbury mixer.

Using an extruder, the thus-obtained kneaded mass was kneaded and extruded into pellets at 140°C to 230°C to obtain a pellet-shaped colorant master batch of 3x3 mm in size. The colorant master batch (5.0 parts) and a polypropylene resin (100.0 parts) of the same kind as the above-described polypropylene resin were mixed. Using an injection molding machine with 50 tons of clamping force, the polypropylene resin was concurrently molded and colored at 160°C to 180°C into a molded plate of 50x60x2 mm. The molded plate was visually observed for its opacifying effect, and the result is shown in Table 1.

The molded plate was cut off with a razor, and its cross-section was observed with an electron microscope. As a result, a state of separation of the pigment-elastomer component into microphases was confirmed. The result is also shown in Table 1.

As is evident from Table 1, the opacifying effect of the molded plate of Example 3 was slightly inferior to that of the molded plate of Example 2, but was still within the acceptable range. Further, the state of separation of the pigment-elastomer component into microphases in the polypropylene resin in the molded plate of Example 3 was also slightly inferior to that of the pigment-elastomer component into microphases in the polypropylene resin in the molded plate of Example 2, but was still within the acceptable range.

### Example 4

A colored molded plate was obtained in a similar manner as in Example 1 except that instead of "Fatty Acid Amide E", a fatty-acid-ester-based dispersant ("EXEL T-95 POWDER", trade name; product of Kao Corporation) was used in the same amount, and was tested as in Example 1. The results are shown in Table 1.

As is evident from Table 1, the molded plate of Example 4 was good in opacifying effect. Further, the state of separation of the pigment-elastomer component into microphases in the polypropylene resin in the molded plate of Example 4 was also good.

### Comparative Example 1

Carbon black (35.0 parts), a polypropylene resin (homopolymer, MI: 18) (64.0 parts), "FATTY ACID AMIDE E" (0.8 part) and "IRGANOX 1076" (0.2 part), which were of the same kinds as the corresponding components employed in Example 1, were kneaded using a Banbury mixer.

Using an extruder, the thus-obtained kneaded mass was kneaded and extruded into pellets at 150°C to 250°C to obtain a pellet-shaped colorant master batch of 3x3 mm in size.

The colorant master batch (5.0 parts) and a polypropylene resin (100.0 parts) of the same kind as the above-described polypropylene resin were mixed. Using an injection molding machine with 50 tons of clamping force, the polypropylene resin was concurrently molded and colored at 180°C to 220°C into a molded plate of 50×60×2 mm. The molded plate was visually observed for its color density (opacifying effect), and the result is shown in Table 1.

As is evident from Table 1, no sufficient opacifying effect was available from the formula of Comparative Example 1 which contained no elastomer component.

### Comparative Example 2

Carbon black (35.0 parts), an elastomer component (VLDPE, MI: 20) (64 parts), "FATTY ACID AMIDE E" (0.8 part) and "IRGANOX 1076" (0.2 part), which were of the same kinds as the corresponding components employed in Example 1, were kneaded using a Banbury mixer.

Using an extruder, the thus-obtained kneaded mass was kneaded and extruded into pellets at 150°C to 250°C to obtain a pellet-shaped colorant master batch of 3x3 mm in size.

The colorant master batch (5.0 parts) and a polypropylene resin (100.0 parts) of the same kind as the above-described polypropylene resin were mixed. Using an injection molding machine with 50 tons of clamping force, the polypropylene resin was concurrently molded and colored at 180°C to 220°C into a molded plate of 50×60×2 mm. The molded plate was visually observed for its opacifying effect, and the result is shown in Table 1.

The molded plate was cut off with a razor, and its cross-section was observed with an electron microscope. As a result, a state of separation of the pigment-elastomer component into microphases was confirmed. The result is also shown in Table 1.

As is evident from Table 1, the formula of Comparative Example 2 which contained no polypropylene resin was slightly inferior in opacifying effect to the molded plate of Example 1, although the opacifying effect of the molded plate of Comparative Example 2 was still within the acceptable range. On the other hand, the state of separation of the pigment-elastomer component into microphases in the polypropylene resin in the molded plate of Comparative Example 2 was insufficient.

### Comparative Example 3

A colored molded plate was obtained in a similar manner as in Comparative Example 1 except that instead of "FATTY ACID AMIDE E", "EXEL T-95 POWDER" was used in the same amount, and was tested as in Comparative Example 1. The results are shown in Table 1.

As is evident from Table 1, no sufficient opacifying effect was available from the formula of Comparative Example 3 which contained no elastomer component.

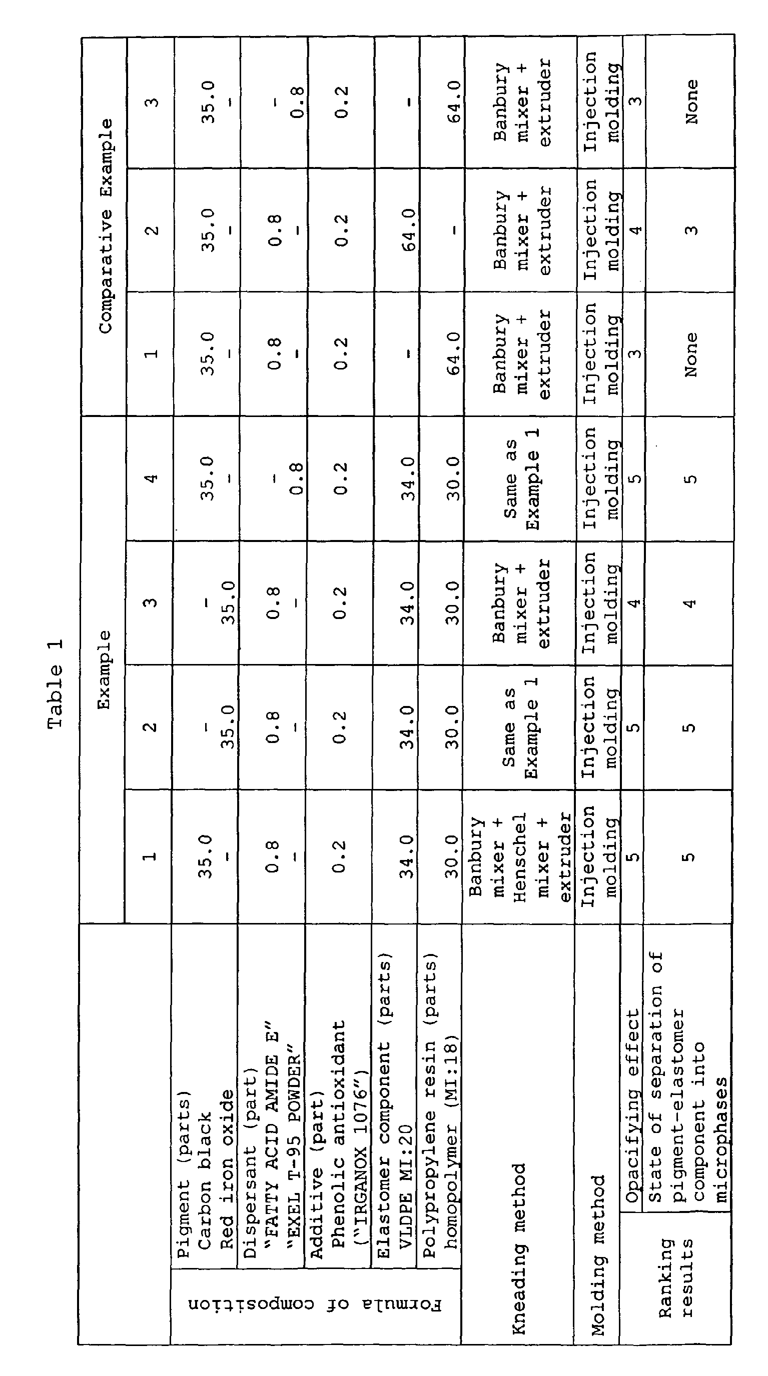

This application claims the priority of Japanese Patent Application 2004-204978 and 2004-204979 filed July 12, 2004, which are incorporated herein by reference.

## Claims

1. A colorant composition comprising:
0.01 to 99.97 wt.% of a polypropylene resin,
0.01 to 60 wt.% of a pigment,
0.01 to 60 wt.% of an elastomer component, and
0.01 to 40 wt.% of a dispersant.

2. A colorant composition according to claim 1, wherein said polypropylene resin has a MI of from 0.1 to 30 (190°C, 2.16 kg).

3. A colorant composition according to claim 1, wherein said pigment is at least one pigment selected from a group consisting of inorganic pigments.

4. A colorant composition according to claim 1, wherein said pigment is carbon black.

5. A colorant composition according to claim 1, wherein said elastomer component has a MI of from 0.1 to 50 (190°C, 2.16 kg) .

6. A colorant composition according to claim 1, wherein said elastomer component is very low density polyethylene.

7. A colorant composition according to claim 1, wherein said dispersant is at least one dispersant selected from the group consisting of fatty-acid-ester-based dispersants and fatty-acid-amide-based dispersants.

8. A process for producing a colorant composition, which comprises kneading 0.01 to 99.97 wt.% of a polypropylene resin, 0.01 to 60 wt.% of a pigment, 0.01 to 60 wt.% of an elastomer component, and 0.01 to 40 wt.% of a dispersant.

9. A process according to claim 8, wherein, after said pigment, elastomer component and dispersant are kneaded, the resulting kneaded mass and said polypropylene are kneaded.
